# FASCICULE DE BREVET EUROPEEN

(11) **EP 3 117 551 B1**
(45) Date de publication et mention de la délivrance du brevet: **23.10.2019**
(21) Numéro de dépôt: 15709518.3
(22) Date de dépôt: 13.03.2015
(51) Int. Cl.: H04L 5/00

(54) **PROCÉDÉ D'ALLOCATION DE RESSOURCES ET SYSTÈME METTANT EN OEUVRE LE PROCÉDÉ**
VERFAHREN ZUR RESSOURCENZUWEISUNG UND DIESES VERFAHREN IMPLEMENTIERENDES SYSTEM
METHOD FOR ALLOCATING RESOURCES AND SYSTEM IMPLEMENTING SAID METHOD

(30) Priorité: 13.03.2014 FR 1400607
(43) Date de publication de la demande: 18.01.2017
(73) Titulaire: AIRBUS DS SAS, 78990 Elancourt (FR)
(72) Inventeur: MONTAIGNE, François, F-59000 Lille (FR); SCHIEL, Jean-Christophe, F-78310 Coignières (FR); PHILIPPE, Guy, F-78130 Maurepas (FR); GEORGEAUX, Eric, F-78180 Montigny le Bretonneux (FR); GRUET, Christophe, F-78180 Montigny le Bretonneux (FR)
(74) Mandataire: Cabinet Camus Lebkiri
(86) Numéro de dépôt international: PCT/EP2015/055337
(87) Numéro de publication internationale: WO 2015/136092

(56) Documents cités:
- US-A1- 2013 231 125
- ALCATEL-LUCENT SHANGHAI BELL ET AL: "Performance Evaluation of X2 Signalling Supporting UL eCoMP with NIB", 3GPP DRAFT; R1-135891 PERFORMANCE EVALUATION OF X2 SIGNALLING SUPPORTING UL ECOMP WITH NIB_FINAL, 3RD GENERATION PARTNERSHIP PROJECT (3GPP), MOBILE COMPETENCE CENTRE ; 650, ROUTE DES LUCIOLES ; F-0692 , vol. RAN WG1, no. San Francisco, USA; 20131111 - 20131115 13 novembre 2013 (2013-11-13), XP050735501, Extrait de l'Internet: URL:http://www.3gpp.org/ftp/Meetings_3GPP_ SYNC/RAN/RAN1/Docs/ [extrait le 2013-11-13]
- "3rd Generation Partnership Project; Technical Specification Group Radio Access Network; Evolved Universal Terrestrial Radio Access (E-UTRA); Physical channels and modulation (Release 12)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 14 décembre 2013 (2013-12-14), pages 1-120, XP050729027,
- "3rd Generation Partnership Project; Technical Specification Group Radio Access Network; Evolved Universal Terrestrial Radio Access (E-UTRA); Physical layer procedures (Release 12)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 15 décembre 2013 (2013-12-15), pages 1-186, XP050729032,
- CHRISTOPHE GRUET ET AL: "The LTE Evolution: Private Mobile Radio Networks", IEEE VEHICULAR TECHNOLOGY MAGAZINE, IEEE, US, vol. 8, no. 2, 1 juin 2013 (2013-06-01), pages 64-70, XP011513178, ISSN: 1556-6072, DOI: 10.1109/MVT.2013.2252291
- ALCATEL-LUCENT ET AL: "Remaining issues for SRS for CoMP", 3GPP DRAFT; R1-123144, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661036, Retrieved from the Internet: URL:http://www.3gpp.org/ftp/tsg_ran/WG1_RL 1/TSGR1_70/Docs/ [retrieved on 2012-08-05]

## Description

### Domaine de l'invention

La présente invention concerne d'une manière générale l'allocation de ressources radio pour des terminaux mobiles évoluant dans un réseau de radiocommunication cellulaire large bande de type LTE (Long Term Evolution). Plus particulièrement, l'invention concerne un procédé proactif d'allocation de ressources dans le sens montant prenant en considération de manière anticipée les possibles interférences à venir entre des terminaux mobiles de cellules adjacentes. L'invention trouve des applications dans les systèmes de radiocommunication professionnelle PMR ("Professional Mobile Radio" en anglais) ou dans les systèmes de radiocommunications grand public.

### Etat de la technique et problèmes techniques rencontrés

Les réseaux cellulaires appliquant la technologie OFDM (Orthogonal Frequency Division Multiplexing) ne subissent pas d'interférence entre terminaux utilisateurs connectés à une même cellule. Par contre les interférences inter-cellules sont les principales interférences qui limitent la capacité du réseau et plus particulièrement les performances des terminaux en bordure de cellule. En effet, lors du déploiement d'un réseau large bande tel qu'un réseau PMR de type LTE appliquant la technologie OFDM, les cellules comportant chacune une station de base se partagent dans un spectre fréquentiel donné les mêmes ressources radio. Ainsi un terminal en bordure de cellule connecté à une première cellule peut de part ses communications montantes avec la première cellule interférer les communications montantes des terminaux d'une deuxième cellule voisine lorsque les deux cellules ont planifié séparément lesdites communications montantes sur les mêmes ressources radio.

Il existe aujourd'hui des solutions pour se prémunir de ces interférences inter-cellules.

Une première solution consiste à mesurer dans chaque cellule la perte de trajet (« Path-loss » en anglais) qui correspond à l'atténuation du signal émis par la station de base et reçu par un terminal mobile. Ainsi les terminaux en bordure de cellules ayant déterminés une forte atténuation de
propagation de signal sont planifiés dans des blocs de ressources spécifiques de la cellule. Ainsi les collisions de ces terminaux avec les terminaux des cellules voisines peuvent être évitées.

Une deuxième méthode repose sur la détermination d'un indicateur de surcharge OI (« Overload Indicator » en anglais) à partir d'une comparaison de la mesure de la puissance totale des interférences inter-cellules reçue par la cellule et d'un seuil d'interférence donné. Cet indicateur OI est transmis aux cellules adjacentes dont l'une d'elles va sélectionner le terminal en cause qui lui est attaché et contrôler directement la puissance de transmission du terminal.

Ces méthodes ont pour inconvénient de baser leur gestion de l'interférence inter-cellules une fois l'interférence détectée ce qui implique un signal déjà interféré et qui ne peut donc pas transmettre convenablement sa communication. L'objectif de l'invention est au contraire de prédire l'interférence avant qu'elle ait lieux et de gérer les ressources radio en fonction de cette prédiction afin de minimiser, voir d'éviter, dès le début de la communication toute interférence inter-cellules.

D'autre part ces solutions ne permettent pas d'estimer de manière précise l'interférence inter-cellule subie. En effet, selon la première méthode connue, les cellules ne se connaissent pas entre elles et n'échangent pas d'information sur des interférences de terminaux provenant de cellules voisines. Selon la deuxième méthode connue, l'indicateur OI ne propose que trois niveaux pour l'interférence qui sont : faible, moyenne ou forte. Ce qui n'est pas assez précis pour estimer l'interférence.

Les documents US 2013/231125 A1 (JEON YOUNGHYUN [KR] ET AL) du 5 Septembre 2013 intitulé « COORDINATED COMMUNICATION METHOD AND APPARATUS » et R1-135891 de ALCATEL-LUCENT SHANGAI BELL intitulé « Performance évaluation of X2 signalling supporting UL eCoMP with NIB » du 13 Novembre 2013, sont connus de l'état de la technique.

### Exposé de l'invention

L'invention propose une façon proactive à partir d'échanges coordonnés entre un groupe de cellules adjacentes de détecter les terminaux potentiellement interférents et d'allouer en fonction de cela des ressources radio pour leur communication montante afin de minimiser toute interférence inter-cellules.

Un objectif de l'invention est de palier les inconvénients de l'art antérieur en proposant un procédé d'allocation de ressources radio dans un réseau de radiocommunication large bande pour des communications montantes, le réseau étant formé de cellules comportant chacune au moins
une station de base et des terminaux. Le procédé est tel que détaillé à la revendication 1.

L'invention a aussi pour objet une station de base exécutant des étapes du procédé d'allocation de ressources radio.

### Brève description des figures

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
- la figure 1 : une représentation schématique d'un système de radiocommunication selon l'invention,
- la figure 2 : un schéma bloc représentatif d'une station de base du système de radiocommunication selon l'invention,
- la figure 3 : un schéma représentatif de blocs de ressources radio alloué ou à allouer,
- la figure 4 : un diagramme fonctionnel d'un procédé d'allocation de ressources radio selon l'invention,
- les figures 5 et 6: des représentations schématiques d'ordonnancement de mesures de signaux SRS
- la figure 7 : une représentation schématique d'allocation de ressources radio selon un premier mode de réalisation de l'invention, et
- la figure 8 : un diagramme fonctionnel d'allocation de ressources radio selon un deuxième mode de réalisation de l'invention.

### Description de l'invention

L'invention est définie et limitée par la portée des revendications 1-10. Dans la description suivante, tout mode de réalisation mentionné et n'étant pas compris dans la portée desdites revendications, est simplement un exemple utile à la compréhension de l'invention.

On note dès à présent que les figures ne sont pas à l'échelle.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisations peuvent également être combinées pour fournir d'autres réalisations.

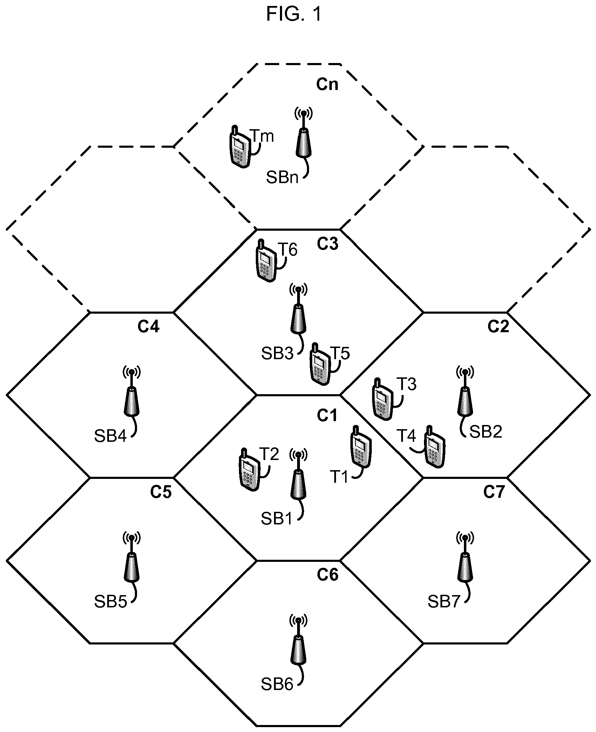

La figure 1 représente un système de radiocommunication selon l'invention. Le système de radiocommunication de l'invention est un réseau de radiocommunication large bande de type LTE ("Long Term Evolution" en anglais) qui dispose de bandes larges de fréquences chacune typiquement supérieure à un Méga-Hertz, par exemples de 1,4 MHz, 3 MHz, 5 MHz, 10 MHz ou 20 MHz.

Le système de radiocommunication comprend des cellules Cn comportant chacune une station de base SBn et des terminaux Tm rattachés à la station de base, avec les indices n et m des entiers et 1≤n≤N, 1≤m≤M. On entend par terminal Tm rattaché à la station de base, un terminal qui s'est enregistré auprès de la station de base pour émettre vers et recevoir depuis la station de base des communications.

Une station de base SBn d'une cellule Cn est apte à communiquer avec un terminal Tm de la cellule Cn par l'intermédiaire d'un canal radio du réseau de radiocommunication large bande. Une station de base est également apte à communiquer avec d'autres stations de base du système par l'intermédiaire d'un canal filaire, type X2 selon le standard LTE. En technologie LTE, la station de base est appelée eNodeB.

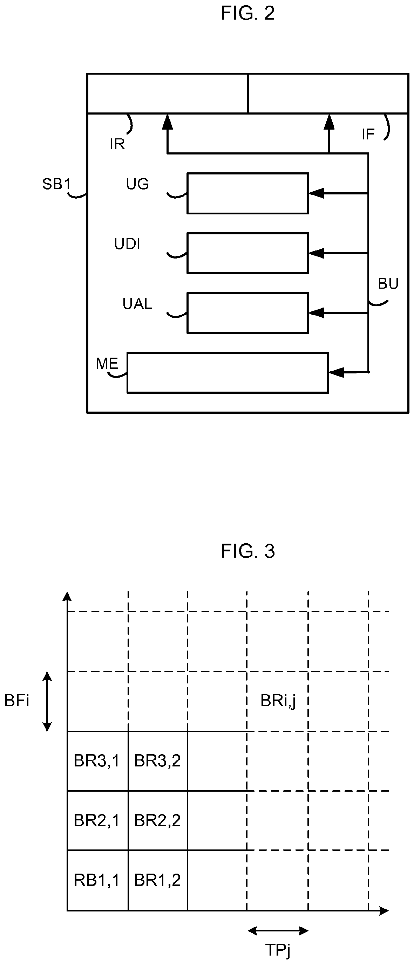

La figure 2 représente, plus en détail, une station de base SBn selon l'invention. La station de base comprend une interface de radiocommunication IR, une interface de communication filaire IF, une unité de gestion de la station UG, une unité de détection des interférences UDI, une unité d'allocation de ressources radio UAL et un ensemble de mémoires ME. Les entités IR, IF, UG, UDI, UAL et ME sont reliées entre elles par un bus bidirectionnel BU.

L'unité de gestion UG comporte par exemple un ou plusieurs processeurs définissant des règles de transmission de signaux d'interférence selon le procédé de l'invention.

L'unité de détection des interférences UDI comporte par exemple un ou plusieurs processeurs exécutant des mesures et des analyses de détections d'interférences selon le procédé de l'invention.

L'unité d'allocation UAL comporte par exemple un ou plusieurs processeurs commandant l'allocation de ressource selon le procédé de l'invention.

L'interface de radiocommunication IR transmet et reçoit des messages, notifications depuis/vers les terminaux de la cellule par l'intermédiaire de canaux de communication radio.

L'interface filaire de communication IF de type X2 selon le standard LTE transmet et reçoit des messages, notifications depuis/vers les stations de base adjacentes du système SY.

L'ensemble de mémoires ME, appelé également mémoires ME, est un support d'enregistrement dans lequel peuvent être sauvegardés des programmes. Il comprend des mémoires volatiles et/ou non volatiles telles que des mémoires EEPROM, ROM, PROM, RAM, DRAM, SRAM, etc. L'algorithme mettant en oeuvre les étapes de mesures et d'analyse de détection d'interférences du procédé selon l'invention exécutées dans la station de base est mémorisé dans les mémoires ME. De même, l'algorithme mettant en oeuvre les étapes d'allocation de ressources radio du procédé selon l'invention exécutées dans la station de base est mémorisé dans les mémoires ME.

En référence à la figure 1, un terminal Tm peut-être par exemple un téléphone (Smartphone), une tablette, une clés-modem USB ou tout autre type d'équipement fixe ou mobile (GPS, ordinateur, écran vidéo, ...). Un terminal Tm est apte à communiquer avec une station de base BSn à laquelle il est rattaché à travers le réseau de radiocommunication large bande.

Les terminaux d'une même cellule communiquent avec la station de base de la cellule par l'intermédiaire de canaux de communication radio. En technologie large bande, un canal de communication radio est formé d'un ou plusieurs blocs de ressources radio. En référence à la figure 3, on entend par bloc de ressources radio, appelé également bloc radio BRi,j, un bloc fréquentiel BFi constitué de plusieurs sous-porteuses fréquentielles pendant une fenêtre temporelle TPj, appelée pas temporel. La fenêtre temporelle est constituée de plusieurs temps symboles au sens de la modulation OFDM.

Les canaux de communication alloués à une cellule sont divisés en deux types de canaux de communications : les canaux de communication montants et les canaux de communication descendants. Un canal de communication montant permet une communication depuis un terminal de la cellule vers la station de la base. Un canal de communication descendant permet une communication depuis la station de base vers un terminal ou un groupe de terminaux de la cellule. Les canaux de communication montants et descendants dans les réseaux de type LTE sont séparés selon la technologie FDD («Frequency Division Duplex » en anglais) selon laquelle le spectre fréquentiel est divisé en deux bandes fréquentielles décalées d'un écart duplex. Une première bande fréquentielle est dédiée aux communications montantes et une deuxième bande fréquentielle est dédiée aux communications descendantes. Dans la suite de la description on s'intéressera tout particulièrement aux canaux de communication montante.

Les canaux de communication montante, chacun formé par un ou plusieurs blocs de ressources, comprennent des canaux de contrôle et des canaux de transport. Les canaux de contrôle comprennent des données de contrôle qui sont par exemple des données de synchronisation entre un terminal et la station de base, des données d'information système, des données d'allocation de ressources. Les canaux de contrôle en communication montante sont accessibles par la station de base. Les canaux de transport permettent le transport des données de signalisation telles que l'identité du destinataire, la modulation de la communication, et le transport des données de trafic, telles que les données voix, les données multimédia. Des canaux de transports en communication montante sont sélectionnés et alloués par la station de base en fonction des demandes de communication envoyées par des terminaux émetteurs. Les données de trafic des canaux de transport ne sont accessibles qu'à un ou plusieurs terminaux spécifiques formant par exemple un groupe de communication.

Pour établir une communication montante entre un terminal de la cellule et la station de base, l'unité UAL de la station de base alloue, selon le procédé de l'invention, un canal de transport montant.

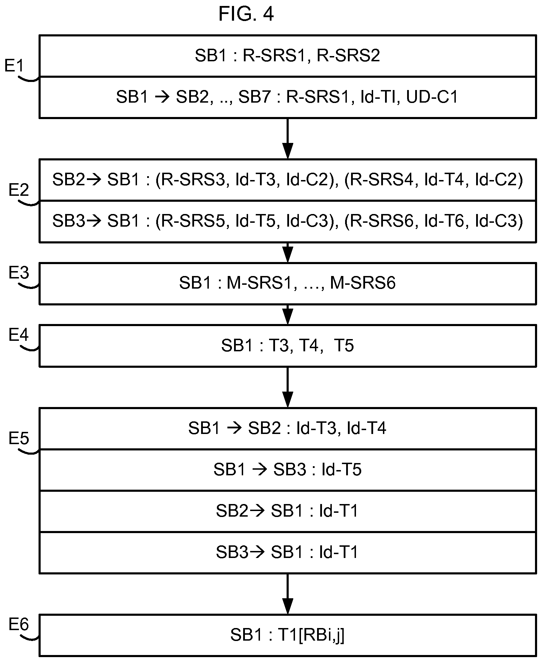

En référence à la figure 4, le procédé d'allocation de ressources radio dans le sens montant comprend essentiellement dans chaque cellule du réseau :
- une étape E3 de mesures d'interférence des terminaux de la cellule et des terminaux des cellules adjacentes sur des canaux montants de contrôle respectivement définis pour chacun desdits terminaux, et
- une étape E6 d'allocation spécifiques des ressources montantes pour les terminaux en fonction de ces mesures d'interférences pour minimiser les interférences inter-cellules entre les terminaux de cellules adjacentes.

Le procédé selon l'invention se base sur une mesure du signal de référence pour estimation SRS (« sounding reference signais ») transmis par chaque terminal à une station de base sur un canal montant physique dans le standard 3GPP LTE, appelé canal de sondage SRS. Le canal de sondage est un canal de contrôle commun tel que le canal PUSCH (« Physical Uplink Shared Channel» en anglais) selon le standard LTE. Une utilisation classique d'un signal SRS transmis par chaque terminal d'une cellule sur le canal de sondage est de permettre à ladite cellule d'estimer la qualité du spectre en sens montant pour chaque terminal de la cellule et d'allouer pour chacun des terminaux les ressources radio les moins interférées dans le spectre. L'estimation peut être faite sur une partie du spectre, par exemple sur quatre blocs radio, ou sur la totalité du spectre, c'est-à-dire sur tous les blocs radio. Un signal SRS défini pour un terminal donné par la station de base de la cellule peut être émit en une seule fois sur la bande de spectre ou divisé en séquences émises à des moments différents sur des parties distinctes de la bande de spectre. La transmission du signal SRS a lieu pendant la durée d'un symbole et est appliquée systématiquement sur le dernier symbole d'une sous-trame du canal de sondage. Leur occurrence de transmission peut être périodique ou apériodique entre 2ms et 320 ms.

L'estimation classique des signaux SRS par une station de base se réfère uniquement aux terminaux de la cellule sans prendre en considération les possibles interférences des terminaux des cellules adjacentes.

Le procédé de l'invention propose une estimation proactive par chaque station de base du réseau, des signaux SRS des terminaux de la cellule et des cellules adjacentes. On entend par estimation proactive une estimation faite sur un canal de contrôle commun (le canal de sondage) et qui permet une détection des interférences intra-cellule et inter-cellules en amont de l'allocation des ressources montantes pour les terminaux d'une cellule. Cette estimation est ensuite utilisée lors de l'étape d'allocation des ressources montantes pour minimiser les interférences intra-cellule et inter-cellules.

La figure 4 représente les étapes du procédé d'allocation de ressources radio montantes dans une cellule. Dans la suite de la description on se réfèrera plus particulièrement à la cellule C1 de la figure 1 en considérant que les autres cellules fonctionnent de manière identique. Le procédé comprend des échanges d'informations entre la cellule C1 et ses cellules adjacentes via des canaux de type X2 selon la norme LTE. La station de base SB1 sélectionne et alloue elle-même les ressources radio des terminaux qui se sont rattachés à la station de base SB1 de la cellule C1 en fonction, entre autres, des informations reçues des cellules adjacentes. On entend par cellules adjacentes de C1 selon la figure 1, les cellules C2 à C7. Les cellules adjacentes de chaque cellule sont différentes d'une cellule à l'autre. L'exemple de la figure 1 représente une configuration d'un groupe de sept cellules adjacentes à partir d'une cellule centrale. Cette configuration peut être plus ou moins grande.

A l'étape E1, lors du rattachement d'un terminal, par exemple le terminal T1 à la station de base SB1, l'unité de gestion UG de la station de base définit des règles R-SRS1 de transmission d'un signal SRS dédié au terminal T1.

Ces règles comprennent des paramètres qui correspondent à :
- la périodicité du signal SRS qui peut être de 2ms à 320 ms,
- le numéro de sous-tramesi le signal SRS est divisé en séquences
- les indices des séquences formant le signal SRS, et
- les caractéristiques physiques de la séquence SRS en terme de largeur de bande et de règles de saut de fréquence, tels que ici le choix du peigne fréquentiel, la capacité à analyser le canal entier et s'il y a ou non des sauts de fréquence.
Les règles R-SRS1 permettent au terminal T1 et la station de base SB1 d'identifier le canal sur lequel le terminal va transmettre le signal de référence SRS.

Les règles R-SRS1 du terminal T1 se distinguent des règles des autres terminaux de la cellule C1, par exemple les règles R-SRS2 du terminal T2. Les signaux SRS des terminaux de la cellule C1 s'appliquent sur les mêmes porteuses fréquentielles mais sont définis de sorte qu'ils soient orthogonaux entre eux afin de ne pas s'interférer et d'être transmis séparément.
Une fois les règles R-SRS1 du terminal T1 définies, elles sont transmises au terminal T1 via l'interface radio IR de la station de base. Les règles R-SRS1 sont également transmises avec une identité Id-T1 du terminal T1 aux stations de base SB2 à SB7 des cellules adjacentes via l'interface filaire IF de la station SB1. Optionnellement, les règles R-SRS1 peuvent être transmises avec l'identité Id-T1 du terminal T1 et l'identité Id-C1 de la cellule C1 aux stations de base SB2 à SB7.

A l'étape E2, la cellule C1 peut également recevoir une ou plusieurs règles de transmission définies pour des terminaux venant de se connecter à une station de base d'une des cellules adjacentes. Par exemple, l'unité IF de la station SB1 reçoit les règles R-SRS3 et R-SRS4 définies respectivement pour les terminaux T3 et T4 de la cellule C2 et les règles R-SRS5 et R-SRS6 définies respectivement pour les terminaux T5 et T6 de la cellule C3. La station de base SB1 mémorise les règles de transmission définies ou reçues ainsi que l'identité du terminal associé et l'identité de la cellule comprenant ledit terminal. Ainsi la station de base SB1 doit avoir mémorisé dans les mémoires ME toutes les règles de transmission définies pour tous les terminaux rattachés à la cellule C1 et aux cellules adjacentes C2 à C7. Dans les mémoires ME, les règles étant appariées à l'identité respective des terminaux et également à l'identité respective des cellules comprenant lesdits terminaux. Ainsi, selon l'exemple de la figure 1, les mémoires ME de la station SB1 doivent avoir en mémoire, les associations [règles SRS/identité terminal/ identité cellule] suivantes:
- [R-SRS1/Id-T1/Id-C1] relative au terminal T1 de la cellule C1,
- [R-SRS2/Id-T2/Id-C1] relative au terminal T2 de la cellule C1,
- [R-SRS3/Id-T3/Id-C2] relatives au terminal T3 de la cellule C2,
- [R-SRS4/Id-T4/Id-C2] relatives au terminal T4 de la cellule C2,
- [R-SRS5/Id-T5/Id-C3] relatives au terminal T5 de la cellule C3,et
- [R-SRS6/Id-T6/Id-C3] relatives au terminal T6 de la cellule C3.

A l'étape E3, l'unité de détection d'interférence UDI de la station de base SB1 effectue des mesures M-SRS1 à M-SRS6 respectivement des signaux SRS des terminaux de la cellule C1 et des cellules adjacentes. L'unité UDI peut effectuer les mesures en se basant sur les règles de transmission définies pour les terminaux de la cellule C1 et des cellules adjacentes qui sont mémorisées dans les mémoires ME. La mesure est une estimation de la qualité d'un signal SRS d'un terminal. La mesure peut être la puissance émise par chaque signal SRS ou le ratio signal sur bruit SINR («Signal-to-Interference plus Noise Ratio » en anglais) dudit signal SRS.

A l'étape E4, l'unité UDI de la station SB1 analyse les possibles interférences inter-cellules en fonction des mesures effectuées à l'étape E3. Ainsi, pour analyser l'interférence de chaque terminal des cellules C1 à C7 sur les terminaux de la cellule C1, la station de base SB1 effectue le rapport de la mesure SRS du terminal analysé sur la mesure SRS d'un terminal de la cellule C1, ce dernier étant distinct du terminal analysé. Chaque rapport déterminé est comparé à un seuil d'interférence SI. Si le rapport est supérieur au seuil donné alors le terminal analysé est susceptible d'interférer l'autre terminal de la cellule C1 si leurs canaux de communication montante sont ultérieurement établis en partie dans les mêmes blocs radio. Le seuil d'interférence SI est déterminé en fonction d'une réduction acceptée de capacité en débit due à l'interférence par rapport au cas non interféré .
En se référant à la figure 1, l'unité UDI doit analyser le signal SRS de T1 par rapport au signal SRS de T2 et le signal SRS de T2 par rapport au signal SRS de T1. De même, l'unité UDI doit analyser les signaux SRS des terminaux T3 à T6 des cellules C2 et C3 en fonction des signaux SRS des terminaux T1 et T2 de la cellule C1. Les terminaux T1 et T2 sont rattachés à la même cellule C1 et sont ainsi susceptibles de s'interférer mutuellement si leurs canaux de communication sont ultérieurement établis en partie sur les mêmes blocs radio. En analysant l'interférence du signal SRS du terminal T1, le rapport de la mesure M-SRS1 du terminal T1 sur la mesure M-SRS2 du terminal T2 peut être alors supérieur au seuil SI ou à l'inverse le rapport de la mesure M-SRS2 du terminal T2 sur la mesure M-SRS1 du terminal T1 peut être alors supérieur au seuil SI. A l'étape E6, le canal de communication montante de T1 devra donc être établi sur des blocs radio différents que ceux alloués pour le canal de communication montante du terminal T2.

Selon un autre exemple, les terminaux T1 et T4 sont proches l'un de l'autre mais rattachés à des cellules différentes, ils sont donc susceptibles de s'interférer si leur canaux de communication sont établis en partie sur les mêmes blocs radio. Ainsi lors de l'analyse de l'interférence du terminal T4 sur le terminal T1, le rapport de la mesure M-SRS4 du terminal T4 sur la mesure M-SRS1 du terminal T1 devrait être supérieur au seuil SI. La même analyse est établie pour les terminaux T3 et T5 respectivement des cellules C2 et C3 qui sont susceptibles d'interférer les communications montantes du terminal T1 dans la cellule C1. Au contraire, les terminaux T6 et T1 étant assez éloignés dans des cellules adjacentes, le rapport de leur mesure M-SRS6 sur M-SRS1 effectué par la station SB1 devrait être inférieur au seuil SI. Le terminal T6 n'est donc pas susceptible d'interférer les communications montantes du terminal T1, même si leurs communications montantes sont établies en partie dans les mêmes blocs radio. Ainsi selon l'exemple de la figure 1, l'unité de détection UDI de la station SB1 détecte les terminaux T3, T4 et T5 des cellules adjacentes comme susceptibles d'interférer la communication montante d'un des terminaux de la cellule C1.

A l'étape E5, l'unité d'interface filaire IF de la station SB1 qui a analysé l'interférence d'un terminal d'une cellule adjacente sur les communications montantes établies dans la cellule C1,transmet à la station de base de la cellule adjacente, les résultats de l'analyse comprenant par exemple l'identité du terminal interféré, l'identité du terminal potentiellement interférent et les mesures ou des valeurs déterminés. En variante, l'unité IF de la station SB1 transmet à la station de base de la cellule adjacente les résultats de l'analyse que si le terminal de la cellule adjacente est détecté comme interférant un terminal de la cellule C1.

Selon l'exemple précédent, la station SB1 transmet les identités ld-T3, Id-T4 des terminaux interférents T3, T4 à la station de base SB2 de la cellule C2 et l'identité Id-T5 du terminal interférent T5 à la station de base SB3 de la cellule C3.

De même, les stations de bases des cellules adjacentes à la cellule C1 transmettent les résultats de l'analyse de l'interférence du terminal T1 sur les communications montantes établies pour les terminaux des cellules adjacentes..

Selon l'exemple précédent, la station de base SB2 transmets à la station de base SB1 l'identité Id-T1 du terminal interférent T1 et la station de base SB3 transmets à la station de base SB1 l'identité Id-T1 du terminal interférent T1.

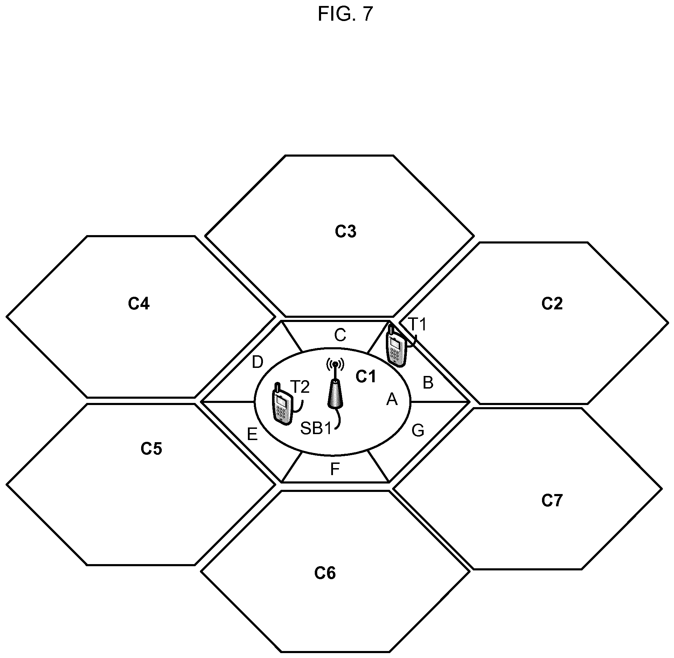

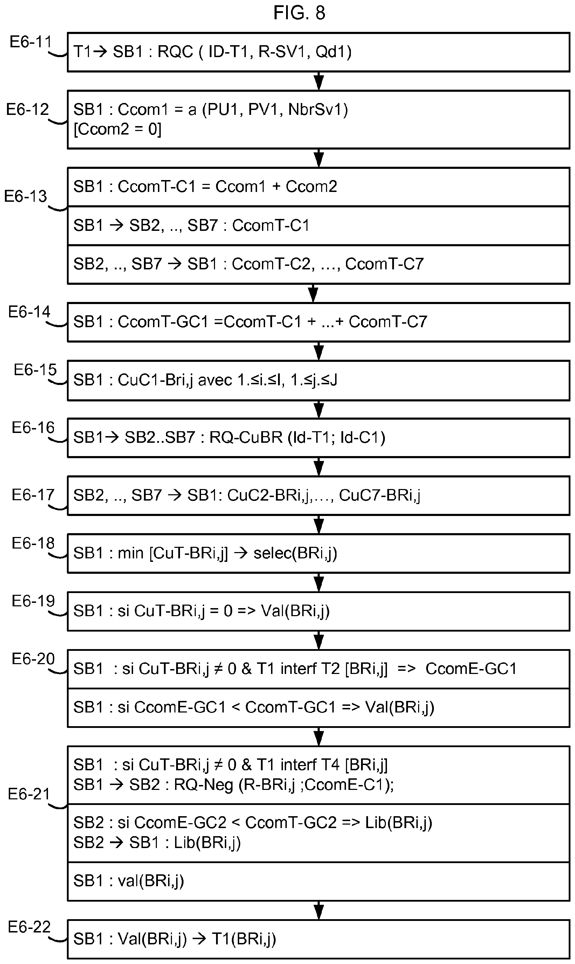

A l'étape E6, l'unité UAL de la station de base SB1 alloue un ou plusieurs des blocs radio BRi,j à une communication montante requise par le terminal T1 en fonction des mesures que l'unité UDI a effectué aux étapes E3 et E4 et des résultats transmis par les cellules C2 à C7. Cette allocation peut être établie selon deux modes de réalisations qui seront présentés en références aux figures 7 et 8.

Les ensembles d'étapes suivantes dans chaque cellule :
- étapes E1 et E2, de définition et transmission des règles SRS,
- étapes E3, E4 et E5, de mesure du signal SRS, de détection d'une interférence, et de transmission/réception de résultats, et
- étape E6 d'allocation de ressources radio pour chaque terminal,
ne s'exécutent pas immédiatement à la suite les unes des autres. En effet leur temps d'exécution diffère d'un ensemble d'étapes à l'autre. Le temps d'exécution des mesures des signaux SRS peut-être plus important que le temps d'exécution d'une allocation de ressource radio. De plus, l'ensemble des étapes E1 et E2 sont exécutées lors d'une demande de rattachement d'un terminal à la station de base alors que les ensembles d'étapes E3 à E5 et E6 peuvent être réitérées périodiquement. En outre, la réitération des allocations de ressources radio dans la station de base, à l'étape E6, peut être plus fréquente que la réitération des mesures SRS à l'étape E3, l'allocation étant alors déterminée à partir de résultats mémorisés dans les mémoires ME.

Un mode de réalisation de la mesure de SRS effectuée à l'étape E3 est maintenant décrit en référence aux figures 1, 5 et 6. Ce mode de réalisation permet d'effectuer des mesures précises et fiables de signaux SRS.

De manière classique, les règles R-SRS1 d'un terminal T1 d'une cellule C1 se distinguent des règles R-SRS2, etc. , des autres terminaux T2, etc... de la même cellule C1. Les signaux SRS des terminaux d'une même cellule s'appliquent sur les mêmes porteuses fréquentielles mais sont définis de sorte qu'ils soient orthogonaux entre eux afin de ne pas s'interférer.

En effet, les signaux SRS sont transmis dans un mode entrelacé FDMA (« Frequency Division Multiple Access » en anglais) selon un spectre en forme de peigne. Le signal SRS s'applique sur toutes les deux porteuses dans la bande de sondage allouée. Cela permet deux transmissions orthogonales en même temps avec un terminal émettant sur les sous-porteuses paires et un autre terminal émettant sur les sous-porteuses impaires de la bande de sondage. De plus, chaque sous-porteuse peut être émise par application de la séquence Zadoff-Chu qui permet un multiplexage d'au plus huit terminaux différents transmettant leur signal SRS en même temps. Chaque séquence Zadoff-Chu comprend deux paramètres, le paramètre de décalage cyclique (« Cyclic Shift parameter ») et le paramètre de « graine » (« seed » en anglais). Le premier paramètre de décalage cyclique permet pour chaque station de base de discriminer les terminaux qui émettent en même temps leur signal SRS. Le deuxième paramètre « graine » permet également pour chaque station de base de discriminer les cellules comprenant les terminaux qui émettent. Toutefois, l'utilisation de deux paramètres ne semble pas suffisante pour différencier tous les terminaux émettant simultanément dans un environnement multi-cellules. En effet, en prenant l'exemple de la figure 1 considérons que les quatre terminaux T1, T2, T3 et T5 de cellules adjacentes différentes sont requis par les stations de base pour transmettre leur signal SRS en même temps. La station de base SB1 réceptionne les quatre signaux SRS en même temps. En fonction des deux paramètres de discrimination de la séquence Zadoff-Chu, les terminaux T1 et T2 rattachés à la cellule C1 peuvent être théoriquement distingués au moyen de leur paramètre de décalage cyclique dans la cellule C1. Le terminal T3 rattaché à la cellule C2 peut être distingué des autres terminaux au moyen du peigne de fréquences qu'il utilise pour émettre son signal SRS. Le terminal T5 connecté à la cellule C3 et transmettant son signal SRS sur le même peigne de fréquence que les terminaux T1 et T2 a seulement le paramètre « graine » différent de ceux des terminaux T1 et T2. Dans ce cas, il est difficile pour la station SB1 de différentier précisément le terminal T5 des terminaux T1 et T2 lorsqu'ils transmettent simultanément leur signal SRS. La station SB1 ne peut les distinguer de manière fiable et effectuer ainsi une mesure précise.

Pour résoudre ce problème de discrimination des terminaux dans un environnement multi-cellules et ainsi fiabiliser les mesures des signaux SRS, les transmissions des signaux SRS des terminaux et leur réception par chaque station de base sont ordonnancées selon deux séquences de temps données. Une première séquence de temps ordonnance pour un groupe de cellules adjacentes les transmissions successives des signaux SRS des terminaux du groupe de cellules. Cette première séquence s'appelle dans la suite de la description : séquence de temps de transmission. Une deuxième séquence de temps ordonnance pour une cellule donnée les réceptions successives des signaux SRS transmis par les terminaux de la cellule ou des cellules adjacentes à ladite cellule. La deuxième séquence s'appelle dans la suite de la description : séquence de temps de réception.

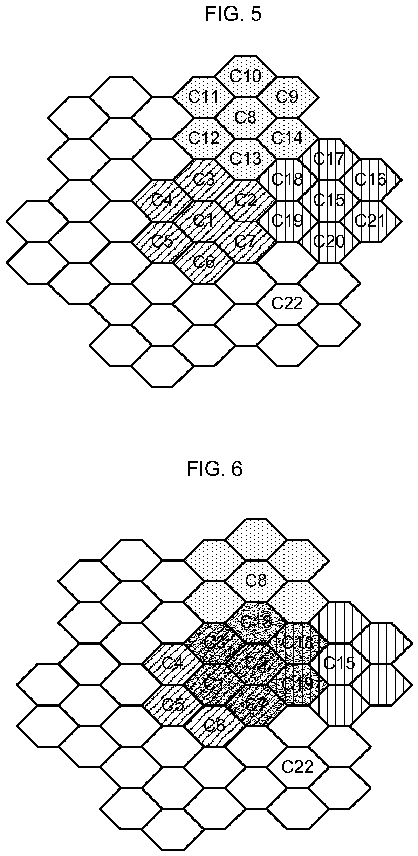

La séquence de temps de transmission est appliquée à un ensemble donné de cellules adjacentes comprenant une cellule centrale et une première couronne de cellules adjacentes à la cellule centrale. Selon l'exemple de la figure 5, les cellules C1 à C7 forment un motif d'ordonnancement de transmission du signal SRS, avec C1 la cellule centrale et C2 à C7 les cellules adjacentes de la couronne. Ce motif est répété dans tous le réseau avec par exemple C8, C15 et C22 des cellules centrales d'un motif d'ordonnancement de transmission du signal SRS. Sur la figure 5 sont représentés en trait oblique le motif formé des cellules C1 à C7, en pointillé le motif formé des cellules C8 à C14 et en trait droit le motif formé des cellules C15 à C21. Les mémoires ME des stations de base d'un ensemble de cellules formant un motif comprend la même séquence de temps de transmission. Cette séquence définit l'ordonnancement successif des transmissions des signaux SRS dans l'ensemble de cellules et indique à chaque instant donné l'identité de la cellule dont la station de base doit commander une transmission d'un signal SRS à un des terminaux qui lui est rattaché. Ainsi selon la séquence de temps de transmission un seul terminal de l'ensemble de cellules transmet à la fois son signal SRS, ce qui permet à la station de base de la cellule qui comporte le terminal et aux stations de base des cellules adjacentes à la dite cellule de mesurer ledit signal de manière précise et fiable.

Ainsi pour transmettre un signal SRS, toutes les stations de base du motif sont synchronisées par la séquence de temps de transmission.
Selon un premier mode de réalisation, la séquence de temps indique successivement à chaque station de base d'ordonner successivement à tous les terminaux qui lui sont rattachés, l'envoi de leur signal SRS. Puis c'est une deuxième station de base du motif qui ordonne successivement à tous les terminaux qui lui sont rattachés, l'envoi de leur signal SRS. Ainsi de suite de station de base en station de base de l'ensemble de cellules, jusqu'à ce que tous les terminaux de l'ensemble de cellules formant le motif aient transmis leur signal SRS. Puis la séquence de temps de transmission se réitère à la première station.

Selon un deuxième mode de réalisation, la séquence de temps de transmission indique à des instants périodiques donnés l'ordonnancement de la transmission d'un signal SRS d'un terminal appartement successivement à une station de base différente du motif. Une fois que toutes les stations de base du motif ont chacune ordonné une transmission d'un signal SRS d'un terminal, le cycle se réitère et successivement chaque station de base du motif ordonne à nouveau une transmission d'un signal SRS à un autre terminal qui lui est rattaché. Ainsi de suite jusqu'à ce que tous les terminaux de l'ensemble de cellules aient transmis leur signal SRS. Puis la séquence se réitère. Ce deuxième mode de réalisation est préféré puisqu'il permet une transmission régulière pour chaque cellule d'un signal SRS.

Selon un exemple du deuxième mode de réalisation relatif à une séquence de temps de transmission appliquée au groupe de cellules C1 à C7, la station SB1 de la cellule C1 ordonne en premier une transmission SRS à l'un des terminaux qui lui est rattaché, par exemple T1. Puis, selon la séquence à la fin d'un temps de transmission du signal SRS1, c'est la station de base SB2 de la cellule C2 qui ordonne à l'un des terminaux qui lui est rattaché de transmettre son signal SRS, par exemple T4. Et ainsi de suite pour toutes les cellules C1 à C7 du motif de jusqu'à réitération de la séquence de temps de transmission avec la station de base SB1 qui ordonna la transmission SRS à un autre terminal de la cellule C1, par exemple T2, et ainsi de suite.

Les séquences de temps de transmission sont appliquées de manière similaire respectivement dans chaque motif d'ordonnancement de transmission SRS formé par l'ensemble de cellules adjacentes. On entend par, « de manière similaire», le fait que deux cellules proches mais appartenant à des motifs différents ne peuvent pas ordonner la transmission de signaux SRS en même temps. Ceci permet que chaque station de base n'ait à écouter qu'un signal SRS à la fois provenant soit de sa cellule soit des cellules voisine et évite tout conflit de distinction des signaux SRS émis en même temps dans des cellules proches. Par exemple, selon la figure 5, la station de base de la cellule C2 du motif C1 à C7 et la station de base de la cellule C9 du motif C8 à C14 ordonnent chacune simultanément une transmission SRS. Puis ce sont les cellules, C3 et C10, et les cellules C11 et C4 et ainsi de suite, afin que deux stations de base de cellules proches telles que C2 et C13 n'ordonnent pas de transmission SRS en même temps.

Les mémoires ME d'une station de base d'une cellule comprennent une séquence de temps de réception de signaux SRS distincte des séquences de temps de réception de signaux SRS des cellules adjacentes. En effet, chaque station de base reçoit des signaux SRS provenant de cellules adjacentes qui sont différentes d'une cellule à l'autre, ces cellules adjacentes pouvant appartenir à un autre motif de transmission de signal SRS ou pas. Chaque cellule du système correspond à une cellule centrale d'un motif d'ordonnancement de réception tel que représenté en grisé pour la cellule centrale C2 sur la figure 6. La séquence de temps de réception d'un signal SRS peut être représentée comme une table indiquant à chaque instant t quelle est la cellule qui ordonne une transmission d'un signal SRS à un terminal lui étant rattaché.

La séquence de temps de réception de signaux SRS appliquée à une cellule est établie de telle sorte qu'elle doit être synchrone à au moins la séquence de temps de transmission de signaux SRS de la cellule. En effet, la cellule centrale du motif d'ordonnancement de transmission et du motif d'ordonnancement de réception est la même par conséquent, la séquence de temps de transmission et la séquence de temps de réception sont identiques. Par contre pour une cellule appartenant à la couronne du motif d'ordonnancement de transmission, la séquence de temps de réception doit être synchronisée à autant de séquences de temps de transmission qu'il y a de cellules adjacentes qui appartiennent à un motif d'ordonnancement de transmission différent. Par exemple, le motif d'ordonnancement de réception ayant pour cellule centrale la cellule C2 recouvre trois motifs d'ordonnancement de transmission ayant pour cellules centrales les cellules C1, C8 et C15. Ainsi la cellule C2 a une séquence de temps de réception synchrone à la séquence de temps de transmission du motif d'ordonnancement de transmission C1 à C7, du motif d'ordonnancement de transmission C8 à C13 et du motif d'ordonnancement de transmission C15 à C21. La séquence de temps de réception propre à chaque station de base lui permet de savoir quelle cellule va ordonner l'émission d'un signal SRS. Cette synchronisation de la séquence de temps de réception sur au moins une séquence de temps de transmission de la cellule et des cellules adjacentes à la cellule évite à la station de base de la cellule de recevoir plusieurs signaux SRS en même temps.

Les cycles des séquences de temps de transmission et des séquences de temps de réception appliquées aux stations de base du système fonctionnent simultanément.

En réception, la cellule peut identifier le terminal qui émet son signal SRS en fonction de la séquence zadoff-chu qui permet de discriminer le terminal. En variante, la cellule qui ordonne l'émission du signal SRS peut transmettre aux cellules voisines l'identité du terminal qui va émettre. Dans ce dernier cas, chaque cellule peut se baser sur les règles de transmission de signal SRS associées dans les mémoires ME à l'identité du terminal qui va émettre pour effectuer leur mesure.

Ainsi à la réception d'un signal SRS, les stations de base n'ont pas besoin d'identifié la cellule qui comporte le terminal émettant le signal.
Selon le standard 3GPP TS 36.213, un terminal transmet périodiquement son signal SRS entre 2ms à 320ms. Ainsi un maximum de terminaux dans un groupe donné de cellules doivent tous transmettre successivement leurs signaux SRS dans une période maximal de 320ms. Par exemple, dans un groupe donné de sept cellules vingt-deux terminaux peuvent transmettre successivement leurs signaux SRS (320 /7 = 22), l'un chaque 2ms. En prenant en considération des transmissions de signaux sur deux peignes fréquentiels parfaitement orthogonaux cela augmente à quarante-quatre terminaux qui peuvent transmettre successivement leurs signaux SRS dans la période de 320ms.

Selon un premier mode de réalisation de l'allocation des ressources radio à l'étape E6 de la figure 4, chaque station de base gère l'allocation des ressources radio en divisant l'ensemble des blocs fréquentiels de la bande de fréquence en plusieurs sous ensemble de blocs fréquentiels. Chaque sous-ensemble de blocs fréquentiels est destiné à l'allocation de ressource pour des terminaux en fonction de leur potentialité à interférer les communications d'une cellule adjacente donnée. Selon l'exemple de la figure 7, la cellule C1 est divisée en sept zones A à F, chaque zone correspondant à une zone de la cellule dans laquelle un terminal de la cellule peut ou non interférer des communications établies dans la cellule adjacente à la zone. Par exemple, les terminaux présents dans les zones B à G sont susceptibles d'interférer les communications respectivement des cellules adjacentes C2 à C7 selon la figure 1. La zone A correspond à la zone de la cellule C1 dans laquelle les terminaux ne sont pas susceptibles d'interférer les communications des cellules adjacentes C2 à C7. Un sous-ensemble plus ou moins grand de blocs fréquentiels, donc de blocs radio, est associé à une zone de la cellule. On peut également dire qu'un sous ensemble de blocs radio est destiné aux terminaux susceptibles d'interférer une cellule adjacente donnée. Dans le cas de la figure 7, chaque station de base divise la bande fréquentielle en sept sous-ensembles de blocs radio pouvant être de taille distincte. Le terminal T1 rattaché à la cellule C1 et proche de la cellule C2, émet une requête d'établissement de communication à la station de base SB1. La station de base SB1 vérifie en fonction des résultats transmis à l'étape E5 par une cellule adjacente, si le terminal T1 est susceptible d'interférer des communications montantes établies dans la cellule adjacente. Cette vérification se fait à l'aide des informations relatives au terminal T1 qui sont mémorisées dans les mémoires ME de SB1. Si le terminal T1 interfère des communications montantes dans une cellule adjacente, par exemple la cellule C2, la station de base SB1 alloue alors au terminal T1 des blocs radio compris dans le sous-ensemble de blocs radio associé à la zone B. Le nombre de blocs radio alloué sera déterminé en fonction de l'identité du terminal, du service de communication demandé par le terminal ainsi que la disponibilité des blocs radio dans ce sous-ensemble. L'allocation de ressources radio est effectuée de manière identique et synchrone dans toutes les cellules du système. Ainsi un sous-ensemble de blocs radio associé à une première zone d'une cellule proche d'une deuxième zone d'une cellule adjacente n'est pas identique au sous-ensemble de blocs radio associé à la deuxième zone de la cellule adjacente. Ceci permet d'éviter toute interférence de communications entre des terminaux proches mais rattachés à des cellules adjacentes puisqu'ils ne communiquent pas sur les mêmes blocs radio.

La politique d'allocation de ressources radio relative à ce premier mode de réalisation donne l'opportunité à chaque station de base de diviser sa population de terminaux et de déterminer dynamiquement un ensemble de terminaux pour lequel une politique d'allocation de ressources radio doit être appliquée. Cependant, ce mode de réalisation d'allocation est assez limité puisque seul un sous-ensemble de blocs radio est destiné pour les communications de terminaux d'une zone spécifique. Ainsi, si plusieurs terminaux se trouvent dans la même zone de la cellule et qu'aucun terminal n'est présent dans une autre zone de la cellule, un sous-ensemble de blocs radio peut être saturé en communication alors qu'un autre sous-ensemble peut être entièrement disponible.

Pour pallier cet inconvénient, un deuxième mode de réalisation d'allocation de ressource consiste en une allocation plus flexible se basant sur l'ensemble de la bande fréquentielle tout en se prévenant de potentielles interférences sur les communications montantes des terminaux de cellules adjacentes. Ce mode de réalisation permet de satisfaire à l'allocation d'un grand nombre de terminaux rattachés à la cellule en évitant toute possible interférence de communication avec les terminaux des cellules adjacentes. Ce mode de réalisation permet également de prendre en considération des priorités relatives aux services de communication requis par les terminaux et des priorités relatives aux utilisateurs des terminaux. Ce mode de réalisation se base sur une négociation entre les différentes cellules du système, plus particulièrement entre des cellules adjacentes pour s'échanger des blocs radio dans un but de diminuer le coût total de besoin en communication du système. Ce coût total de besoin en communication est déterminé par chaque station de base en fonction de plusieurs critères tels que pour chaque terminal requérant un établissement d'une communication à la cellule : le type d'utilisateur du terminal et le type de service requis par terminal et le nombre de blocs ressource demandé par le terminal ou la quantité de données à transmettre.

La figure 8 représente un diagramme fonctionnel d'allocation de ressources radio selon le deuxième mode de réalisation exécuté par la station de base de la cellule C1 lors d'une demande d'établissement d'une communication par le terminal T1 selon la figure 1. Toutes les stations de base du système selon l'invention fonctionnent de manière identique à la réception d'une ou plusieurs requêtes d'établissement d'une communication par des terminaux de chaque cellule. Dans l'exemple, on suppose que la station de base SB1 a déjà établi une communication pour un service du terminal T2.

A l'étape E6-11, lors de son rattachement à la station de base SB1 ou lorsqu'il souhaite communiquer une fois rattaché, le terminal T1 transmet à la station de base SB1 une requête d'établissement de communication RQC qui comprend entre autre l'identité du terminal Id-T1 donc de son utilisateur, une référence du service de communication requis R-SV1 et une information sur la quantité de données à transmettre Qd1. Le terminal T1 peut demander l'établissement de plusieurs communications pour différents services requis. Pour simplifier la description on considère que le terminal T1 requière un seul service que l'on nommera SV1.

A l'étape E6-12, à la réception de la requête RQC la station de base SB1 détermine un coût de besoin en communication Ccom1 en fonction d'une valeur de priorité PU1 liée à l'utilisateur du terminal T1, en fonction d'une valeur de priorité PV1 liée au service requis SV1 et en fonction d'un nombre de blocs radio NbrSv1 nécessaire à l'établissement de la communication et déterminé à partir de l'information Qd1. Les premières valeurs sont associées dans les mémoires ME de la station SB1 respectivement à l'identité du terminal ID-T1 et à la référence du service requis R-SV1. Par exemple une valeur de priorité liée à un particulier est inférieure à une valeur de priorité liée à un professionnel de la sécurité. Egalement une valeur de priorité liée à un service d'appel d'urgence est supérieure à une valeur de priorité liée à un service de communication classique. Plus ces valeurs seront importantes et plus le coût de besoin en communication sera grand. Il peut y avoir plusieurs terminaux rattachés à la station de base qui requièrent respectivement et simultanément l'établissement d'une communication à la station de base. Dans ce cas, la station de base détermine pour chaque service requis par les terminaux un coût de besoin en communication et traite en premier l'établissement de la communication pour le service ayant un coût de besoin en communication le plus important. Dans l'exemple, le besoin en communication requis par le terminal T2 est déjà satisfait par la station de base SB1 donc son coût de besoin en communication est nul : Ccom2 = 0.

A l'étape E6-13, la station de base SB1 détermine un coût total CcomT-C1 de besoin en communication pour la cellule C1 qui correspond à la somme des coûts de besoin en communication des terminaux de la cellule C1. Donc le coût total CcomT-C1 est égal à la somme du coût de besoin en communication Ccom1 et du coût de besoin en communication Ccom2. Chaque station de base détermine ainsi un coût total de besoin en communication et transmet ce coût total aux stations de base des cellules adjacentes. Donc la station SB1 reçoit également le coût total de besoin en communication CcomT-C2, ..., CcomT-C7 respectivement des cellules adjacentes C2 à C7.

A l'étape E6-14, la station de base SB1 détermine un coût total de besoin en communication CcomT-GC1, pour le groupe de cellules GC1 formé des cellules C1 à C7. Le coût total de besoin en communication pour le groupe de cellules CG1 correspond à la somme des coûts totaux de besoin en communication des cellules du groupe CG1. De même, chaque cellule du système détermine un coût totale de besoin en communication d'un groupe de cellules formé de la cellule qui détermine ce coût et de ses cellules adjacentes.

Puis à l'étape E6-15, la station de base SB1 détermine pour chaque bloc radio BRi,j un coût d'utilisation CuC1-Bri,j en fonction des mesures qu'elle a établies à l'étape E3 lors de la transmission du signal SRS1 de T1, à l'étape E4 lors de la détermination de l'interférence de T1 par rapport à chaque terminal de la cellule C1 selon un seuil d'interférence. Si le terminal T1 est détecté susceptible d'interférer un terminal déjà en communication dans la cellule C1, le coût d'utilisation du ou des blocs radio alloués au terminal interféré est déterminé en fonction de la valeur de priorité liée à l'utilisateur du terminal interféré et en fonction de la valeur de la priorité liée au service requis par le terminal interféré. Tous les terminaux rattachés à la cellule C1 sont susceptibles d'être interférés par T1. Dans l'exemple de la figure 1, seul le terminal T2 est également rattaché à la cellule C1 donc le coût d'utilisation du ou des blocs de ressources alloués au terminal T2 sont déterminés en fonction de la valeur de priorité PU2 liée à l'utilisateur de T2 et en fonction de la valeur de la priorité PV2 liée au service requis par le terminal T2. Les blocs radio non utilisés par la cellule C1 ont un coût d'utilisation nul.

Puis à l'étape E6-16, la station de base SB1 transmet à chaque station de base des cellules adjacentes C2 à C7 une requête de coût d'utilisation RQ-CuBR pour recevoir les coûts d'utilisation de chaque bloc radio BRi,j de la bande de fréquence déterminés par chaque cellule adjacente en fonction d'une possible interférence du terminal T1. La requête RQ-CuBR comprend l'identité du terminal T1, Id-T1 et éventuellement l'identité de la cellule C1, Id-C1. A la réception d'une telle requête chaque cellule adjacente à C1 détermine un coût d'utilisation CuC2-BRi,j, à CuC7-BRi,j pour chaque bloc radio BRi,j en fonction des mesures qu'elle a établi à l'étape E3 appliquée à ladite cellule adjacente lors de la transmission du signal SRS1 de T1 et à l'étape E4 appliquée à ladite cellule adjacente lors de la détermination de l'interférence de T1 par rapport à chaque terminal de la cellule adjacente selon un seuil d'interférence. Si le terminal T1 est détecté susceptible d'interférer un terminal de la cellule adjacente, le ou les blocs radio alloués pour le terminal interféré a un coût d'utilisation déterminé en fonction de la valeur de la priorité liée à l'utilisateur du terminal interféré et de la valeur de la priorité liée au service requis pas le terminal interféré. Cette détermination peut être réalisée par l'application d'une fonction affine sur les paramètres de priorité liés à l'utilisateur et au service. Si le terminal T1 n'est pas détecté comme interférant un autre terminal de la cellule adjacente, les blocs de ressources alloués à ce terminal non-interféré ont un coût d'utilisation nul. De même les blocs non utilisés par la cellule adjacente ont un coût d'utilisation nul. Ainsi chaque station de base des cellules adjacentes C2 à C7 transmet à la station de base SB1 pour chaque bloc radio BRi,j son coût d'utilisation CuC2-BRi,j à CuC7-BRi,j. De même, lorsque SB1 reçoit une telle requête d'une des cellules adjacentes elle détermine le coût d'utilisation de chaque bloc radio BRi,j en fonction de la possible interférence d'un terminal de la cellule adjacente qui à transmis la requête.

A l'étape E6-17, la station de base SB1 reçoit les coûts d'utilisation de chaque bloc radio CuC2-BRi,j à CuC7-Bri,j déterminés par chaque cellule adjacente à C1. Les coûts d'utilisations CuC1-BRi,j à CuC7-BRi,j sont des résultats de l'analyse de détection d'interférence du terminal T1 sur les terminaux des cellules du groupe GC1 transmis à l'étape E5 de la figure 4. La station de base SB1 détermine par bloc radio BRi,j le coût d'utilisation total CuT-Bri,j de chaque bloc radio BRi,j qui correspond à la somme des coûts d'utilisation par bloc radio des cellules C1 à C7 : CuT-Bri,j = CuC1-Bri,j + CuC2-Bri,j+ ...+ CuC7-Bri,j.

A l'étape E6-18, la station de base SB1 sélectionne les blocs radio ayant un faible coût d'utilisation total. Le nombre de blocs radio sélectionné est égal au nombre de blocs radio NbrSv1 requis par le terminal T1. L'objectif des étapes suivantes E6-19 à E6-21, est d'obtenir uncoût de besoin en communication Ccom1 pour le terminal T1 nul si tous les blocs radio sélectionnés et alloués sont soient pour partie non utilisés par les cellules C1 à C2, soient pour partie utilisés par des terminaux non interférés par le terminal T1, soient pour partie libérés par des cellules adjacentes qui les occupent après négociation entre la cellule C1 et lesdites cellules adjacentes. La station de base SB1 détermine un coût total estimé_de besoin en service de la cellule C1 en considérant le coût de besoin en service Csv1 de T1 nul.

A l'étape E6-19, si des blocs radio sélectionnés ont un coût d'utilisation nul, la station SB1 va valider la sélection desdits blocs pour satisfaire en partie ou totalement la requête du terminal T1.

A l'étape E6-20, si la station de base sélectionne des blocs radio qu'elle a déjà alloué à d'autres terminaux de la cellule C1, elle détermine le coût estimé CcomE-C1 de besoin en communication de la cellule C1 en prenant en considération :
- d'une part le coût Ccom1 de besoin en communication du terminal T1, ce coût Ccom1 étant déterminé en fonction de la valeur de priorité de l'utilisateur, de la valeur de priorité du service et du nombre de blocs radio restants. On exclut des blocs radio restants les blocs radio sélectionné déjà validé (par exemple à l'étape E6-19) et les blocs radio sélectionnés déjà alloués à d'autres terminaux de la cellule C1. S'il n'y a pas de bloc restant, alors le coût Ccom1 est nul.
- d'autre part le coût de besoin en communication du terminal pouvant être déchu de ses blocs radio, par exemple T2, qui n'est plus un coût nul puisque le besoin dudit terminal déchu n'est plus satisfait.
Puis, la station SB1 détermine le coût estimé CcomE-GC1 de besoin en communication du groupe GC1 en prenant en compte le coût estimé CcomE-C1 de la cellule C1. Si le coût estimé CcomE-GC1 est supérieur au coût total CcomT-GC1 déterminé à l'étape E6-14 la station SB1 ne libère pas les blocs radio sélectionnés. Dans le cas contraire la station SB1 libère les blocs radio sélectionnés pour valider la sélection desdits blocs radio, afin de satisfaire en partie ou totalement la requête du terminal T1.

A l'étape E6-21, si la station de base sélectionne des blocs radio déjà occupés par des terminaux susceptibles d'être interférés par le terminal T1 et appartenant à une ou des cellules adjacentes C2 à C7, la station de base SB1 transmet une requête de négociation de blocs radio RQ-Neg audites cellules adjacentes. La requête RQ-Neg comprend une référence aux blocs radio sélectionnés R-BRi,j et le coût estimé CcomE-C1 de besoin en communication de la cellule C1. Le coût estimé CcomE-C1 comprend le coût Ccom1 déterminé en fonction de la valeur de priorité de l'utilisateur, de la valeur de priorité du service et du nombre de blocs radio restants. On exclut des blocs radio restants les blocs radio sélectionné déjà validé (par exemple aux étapes E6-19 et E6-20) et les blocs radio sélectionnés déjà alloués à d'autres terminaux de la cellule adjacente destinataire de la requête RQ-Neg. S'il n'y a pas de bloc restant, alors le coût Ccom1 est nul. La cellule adjacente qui a reçu la requête détermine un coût estimé de besoin en communication pour ladite cellule si elle libère le ou les blocs radio sélectionnés et déchois donc un ou plusieurs terminaux qui lui sont rattachés. Puis la cellule adjacente détermine le coût estimé de besoin en communication du groupe de cellule formant ladite cellule adjacente et ses propres cellules adjacentes. Si le coût estimé de besoin en communication du groupe de cellule est inférieur au coût total de besoin en communication déterminé, selon l'étape E6-14 appliquée à la dite cellule adjacente, et si la cellule adjacente n'a pas reçut de proposition plus intéressante d'autres de ses cellules adjacentes pour diminuer le coût total de besoin en communication du groupe qu'elle forme, elle libère le ou les blocs radio pour la cellule C1. Dans le cas contraire la cellule adjacente ne libère pas les blocs radio sélectionnés pour la cellule C1. La cellule adjacente notifie à la station de base SB1 si les blocs sélectionnés sont libérés ou non. Puis à la réception d'une réponse positive de la cellule adjacente, la station SB1 valide la sélection des blocs radio pour satisfaire en partie ou totalement la requête du terminal T1.

Si des blocs radio sélectionnés ne peuvent être disponibles, la station de base SB1 peut sélectionner d'autres blocs radio de faible coût d'utilisation et réitère les étapes E6-19 à E6-21. S'il n'y a pas d'autres blocs radio de faible coût, la station de base transmet au terminal T1 une notification lui indiquant que le canal de communication établis pour le service requis n'est pas optimal. Le terminal T1 peut accepter le canal de communication peu optimisé ou refuser l'établissement du canal de communication. Les étapes E6-19, E6-20 et E6-21 peuvent s'exécuter successivement ou simultanément.

A l'étape E6-22, la station de base alloue au terminal T1 les blocs de ressources sélectionnés et validés.

Voici ci-après un exemple numérique simplifié du deuxième mode de réalisation d'allocation en référence à la disposition des terminaux de la figure 1 et en considérant comme blocs radio de la bande de fréquence : les blocs radio BR1,1 à BR3,2 de la figure 3. Cet exemple ne recouvre pas la totalité des cas possibles couverts par la description précédente. Cet exemple n'est indiqué qu'à titre illustratif.
On considère dans cet exemple les valeurs numériques suivantes :
- la valeur de priorité liée aux utilisateurs des terminaux T1 à T6 est égale à 1 : PU1 = PU2 = PU3 = PU4 = PU5 = PU6 = 1.
- Le terminal T1 requière un service de valeur de priorité égale à 1 pour un bloc radio : PV1 = 1.
- le bloc radio BR1,1 est alloué au terminal T2 pour l'établissement d'un service de valeur de priorité égal à 1 : PV2 = 1.
- le bloc radio BR2,1 est alloué au terminal T3 pour l'établissement d'un service de valeur de priorité égal à 1 : PV3 = 1.
- les blocs radio BR3,1 et BR1,2 sont alloués au terminal T4 pour l'établissement d'un service de valeur de priorité égal à 0,5 : PV4 = 0,5.
- les blocs radio BR2,2 et BR3,2 sont alloués au terminal T5 pour l'établissement d'un service de valeur de priorité égal à 1 : PV5 = 1, et
- les blocs radio BR1,1 et BR2,1 sont alloués au terminal T6 pour l'établissement d'un service de valeur de priorité égal à 1 : PV6 = 1.
Initialement toutes les demandes des terminaux des cellules C1 à C2 sont satisfaites. Par conséquent initialement le coût de besoin en communication de chaque terminal est nul, le coût total de besoin en communication de chaque cellule C1 à C7 est nul et le coût total de besoin en communication du groupe de cellules C1 à C7 est également nul.

A l'étape E6-11, la station de base SB1 reçoit la requête RQC du terminal T1.

A l'étape E6-12, la station de base détermine le coût de besoin en communication du terminal T1 : Ccom1= a(PU1, PV1, NbrSv1) = 1 en considérant la fonction a une fonction de type affine .

A l'étape E6-13, la station SB1 détermine le coût total de besoin en communication de la cellule C1 : CcomT-C1 = Ccom1 + Ccom2 = 1. Comme le besoin en communication du terminal T2 est satisfait : Ccom2=0. Chaque station de base SB1 à SB7 détermine ainsi respectivement un coût total de besoin en communication CcomT-C1 à CcomT-C7 et transmet ce coût total aux stations de base des cellules adjacentes.

A l'étape E6-14, la station SB1 détermine le coût total de besoin en communication du groupe de cellules CG1 formé des cellules C1 à C7 : CcomT-GC1 = CcomT-C1 + ... CcomT-C7 = 1, puisque les coûts CcomT-C2 à CcomT-C7 sont nul initialement.

A l'étape E6-15, la station de base SB1 détermine pour chaque bloc radio BRi,j un coût d'utilisation CuC1-BRi,j : CuC1-BR1,1 = 1 ; CuC1-BR1,2 = 0 ; CuC1-BR2,1 = 0 ; CuC1-BR2,2 = 0 ; CuC1-BR3,1 = 0 et CuC1-BR3,2=0.

A l'étape E6-16, la station de base SB1 transmet à chaque station de base des cellules adjacentes C2 à C7 une requête de coût d'utilisation RQ-CuBR. A la réception de la requête RQ-CuBR chaque cellule C2 à C7 détermine un coût d'utilisation CuC2-BRi,j, à CuC7-BRi,j pour chaque bloc radio BRi,j en fonction de l'interférence du terminal T1.

Dans la cellule C2, le terminal T3 est susceptible d'être interféré par le terminal T1 donc le coût d'utilisation du bloc radio alloué à T3 est: CuC2-BR2,1= 1 ;
Dans la cellule C2, le terminal T4 est susceptible d'être interféré par le terminal T1 donc les coûts d'utilisation des blocs radio alloués à T4 sont : CuC2-BR3,1 = 0,5; CuC2-BR1,2 = 0,5.

Les blocs non utilisés par la cellule C2 ont des coûts d'utilisation nuls: CuC2-BR1,1 = 0, CuC2-BR2,2 = 0 et CuC2-BR3,2=0 ;
Dans la cellule C3, le terminal T5 est susceptible d'être interféré par le terminal T1. Les coûts d'utilisation des blocs radio alloués à T5 sont: CuC3-BR2,2 = 1 ; CuC3-BR3,2 = 1.

Dans la cellule C3, le terminal T6 n'est pas susceptible d'être interféré par le terminal T1 et réciproquement donc les coûts d'utilisation des blocs radio alloués à T6 sont nuls: CuC3-BR1,1 = 0 ; CuC3-BR2,1 = 0.
Les blocs non utilisés par la cellule C3 ont les coûts d'utilisation nuls : CuC3-BR1,2 = 0 ; CuC3-BR3,1 = 0.

Les cellules C4 à C7 n'ont pas de terminaux selon l'exemple de la figure 1. Donc le coût d'utilisation de leur bloc radio est nul.

A l'étape E6-17, la station de base SB1 reçoit des cellules C2 et C7 les coûts d'utilisation précédemment déterminés. La station SB1 détermine par bloc radio le coût d'utilisation total de chaque bloc radio :
- CuT-BR1,1 = CuC1-BR1,1 + ...+ CuC7-BR1,1 = 1
- CuT-BR2,1 = CuC1-BR2,1 + ...+ CuC7-BR2,1 = 1
- CuT-BR3,1 = CuC1-BR3,1 + ...+ CuC7-BR3,1 = 0,5
- CuT-BR1,2 = CuC1 -BR1,2 + ...+ CuC7-BR1,2 = 0,5
- CuT-BR2,2 = CuC1-BR2,2 + ...+ CuC7-BR2,2 = 1
- CuT-BR3,2 = CuC1-BR3,2 + ...+ CuC7-BR3,2 = 1

Dans l'exemple il n'y a pas de bloc radio ayant un coût d'utilisation total nul donc, à l'étape E6-18, la station de base SB1 sélectionne un des blocs radio ayant un coût d'utilisation total le plus faible. La station SB1 peut sélectionner un des blocs radio BR3,1, BR1,2 déjà alloués au terminal T4 de la cellule C2.

Les blocs BR3,1 et BR1,2 n'ayant pas de coût d'utilisation total nul et n'étant pas déjà alloués à un des terminaux de la cellule C1, la station de base SB1 n'exécute pas les étapes E6-19 et E6-20.

A l'étape E6-21, la station de base SB1 transmet une requête de négociation de blocs radio RQ-Neg à la cellule C2. La requête RQ-Neg comprend des références aux blocs radio BR3,1, BR1,2 et le coût total estimé de besoin en communication de la cellule C1 en considérant le besoin en communication du terminal T1 satisfait si la sélection est validée : CcomE-C1= 0.

A la réception de la requête RQ-Neg, la station de base de la cellule C2 détermine un coût total de besoin en communication CcomT-GC2 du groupe de cellules formé des cellules C2, C1, C7, C19, C13 et C3 selon la figure 5. La détermination de CcomT-GC2 est effectuée à l'étape E-14 appliquée à la cellule C2. Ainsi CcomT-GC2 = CcomT-C2 + CcomT-C1 + CcomT-C7 + CcomT-C19 + CcomT-C13 + CcomT-C3 = 1, en considérant initialement dans les cellules C2, C3, C7, C19 et C13 que les besoins en communication sont satisfaits.

Puis la station SB2 détermine un coût estimé de besoin en communication pour le groupe de cellule GC2 : CcomE-GC2 en considérant qu'elle libère un des blocs radio BR3,1 ou BR1,2.Dans ce cas le coût de besoin en communication CcomE-C1 pour la cellule C1 serait nul et le coût estimé de besoin en communication CcomE-C2 pour la cellule C2 serait égale à 0,5 qui est le coût de besoin en communication du terminal T4 si son besoin en communication n'est plus entièrement satisfait. Dans l'exemple, on suppose qu'aucune autre cellule adjacente à la cellule C2 ne demande de négociation. Ainsi le coût total estimé de besoin en communication CcomE-GC2 = 0,5 est inférieur au coût total de besoin en communication CcomT-CG2 = 1 déterminé à l'étape E6-14. Donc si la station SB2 libère un des blocs ressource requis par la station SB1, le coût total de besoin en communication pour le groupe GC2 sera plus faible.

La station de base B2 libère un des blocs radio BR3,1, BR1,2. La station de base SB2 notifie à la station de base SB1 que le bloc BR3,1, est libéré. A la réception d'une réponse positive de la station SB2, la station SB1 valide la sélection du bloc radio BR3,1, et alloue le bloc radio au terminal T1 pour satisfaire la requête du terminal T1, à l'étape E6-22.

## Revendications

1. Procédé d'allocation de ressources radio dans un réseau de radiocommunication large bande pour des communications montantes, le réseau étant formé de cellules comportant chacune au moins une station de base et des terminaux, le procédé étant **caractérisé en ce qu'**il comprend les étapes suivantes, lors d'un rattachement d'un premier terminal (T1) à une première station de base (SB1) d'une première cellule (C1) d'un groupe de cellules (C1 à C7) formé de la première cellule et de ses cellules adjacentes :
- des mesures (E3), effectuées par chaque station de base du groupe de cellules, de qualité de signaux de référence SRS définis respectivement pour les terminaux du groupe de cellules, chaque station de base effectuant les mesures (E3) en ordonnant successivement à chaque terminal rattaché à ladite chaque station de base la transmission d'un signal de référence SRS défini pour ledit chaque terminal selon une première séquence de temps de transmission, la séquence de temps de transmission étant appliquée de manière identique aux cellules du groupe de cellules (C1 à C7), la séquence définissant un ordonnancement successif de transmissions de signaux de référence SRS, en indiquant à un instant donné une identité d'une cellule du groupe de cellules dans laquelle la station de base doit commander une transmission d'un signal de référence SRS à un des terminaux lui étant rattaché de sorte qu'un seul terminal du groupe de cellules transmette à la fois son signal de référence SRS;
- une analyse (E4) de détection d'une interférence du premier terminal (T1) sur des communications montantes des terminaux rattachés aux stations de base du groupe de cellules, l'analyse étant effectuée en fonction des mesures de qualité des signaux de référence SRS, par chaque station de base du groupe de cellules,
- une allocation de ressources radio (E6) par la première station de base pour une communication montante du premier terminal en fonction de résultats de l'analyse de détection d'une interférence du premier terminal sur les communications montantes des autres terminaux du groupe de cellules, les résultats provenant de chaque cellule du groupe de cellules.

2. Procédé selon la revendication 1, **caractérisé en ce qu'**il comprend lors du rattachement du premier terminal à la première station de base :
- une définition (E1) de premières règles de transmission (R-SRS1) d'un premier signal de référence SRS défini pour le premier terminal, les premières règles de transmission étant distinctes des règles de transmission de signaux de référence SRS d'autres terminaux rattachés à la première station de base afin que les signaux de références de tous les terminaux rattachés à la premières station de base soient orthogonaux entre eux, et
- une transmission des premières règles de transmission définies aux autres stations de base du groupe de cellules.

3. Procédé selon l'une quelconque des revendications 1 à 2, **caractérisé en ce que** l'analyse de détection d'une interférence du premier terminal (T1) sur un autre des terminaux du groupe de cellules comprend, dans chaque station de base du groupe de cellules, les étapes suivantes :
- une détermination d'un rapport d'une mesure de qualité d'un premier signal de référence SRS défini pour le premier terminal sur la mesure de qualité d'un signal de référence SRS défini pour l'autre terminal rattaché à la station de base effectuant l'analyse de détection d'interférence,
- une comparaison du rapport déterminé à un seuil d'interférence (SI), et
- si le rapport déterminé est supérieur au seuil d'interférence (SI), une détection d'une interférence du premier terminal sur l'autre terminal.

4. Procédé selon l'une des revendications précédentes, **caractérisé en ce que** pour effectuer les mesures (E3) de qualité des signaux de référence des terminaux du groupe de cellules, chaque station de base réceptionne successivement un signal de référence SRS défini pour un terminal du groupe de cellules selon une deuxième séquence de temps de réception, la séquence de temps de transmission et la séquence de temps de réception fonctionnant de manière simultanée.

5. Procédé selon l'une quelconque des revendications précédentes, **caractérisé en ce que** le motif d'ordonnancement de transmission de signal SRS se répète dans tous le réseau cellulaire et la séquence de temps de transmission identique dans chaque motif d'ordonnancement est appliquée de telle sorte que deux stations de base de cellules adjacentes mais appartenant à des ensembles de cellules différents ne peuvent pas ordonner la transmission d'un signal de référence SRS en même temps.

6. Procédé selon l'une quelconque des revendications précédentes, **caractérisé en ce que** la séquence de temps de réception de signal de référence SRS est propre à chaque cellule du réseau, la séquence définissant un ordonnancement successif de réceptions de signaux de référence SRS transmis respectivement par les terminaux des cellules d'un groupe de cellules formé par la cellule ordonnancées par la séquence de temps de réception et les cellules adjacentes à ladite cellule, en indiquant à un instant donné l'identité d'une cellule dans laquelle un terminal émet un signal de référence SRS.

7. Procédé selon la revendication 6, **caractérisé en ce que** la séquence de temps de réception d'une cellule est synchrone à au moins la séquence de temps de transmission de la cellule.

8. Procédé selon l'une quelconque des revendications précédentes en ce que l'allocation de ressources (E6) par la première station de base pour le premier terminal comprend les étapes suivantes :
- une réception (E6-12) d'une requête d'établissement d'une communication (RQC) comprenant une identité du premier terminal (ID-T1), une référence (R-SV1) à un service de communication requis et une information relative au nombre (NbrSv1) de blocs de ressource nécessaires pour communiquer,
- une détermination (E6-14) d'un coût total de besoin en communication (CcomT-GC1) pour le groupe de cellules formé de la première cellule et de ses cellules adjacentes en fonction de valeurs de priorité (PU1, PU2, ..., PU6) liées respectivement aux identités des terminaux du groupe de cellules, de valeurs de service (PV1, PV2, ..) liées respectivement à des services requis par les terminaux du groupe de cellules, et des nombres (NbrSV1,...) de blocs de ressources requis respectivement par les terminaux du groupe de cellules,
- une détermination (E6-17) d'un coût total d'utilisation (CuT-Bri,j) de chaque bloc de ressource (Bri,j) d'une bande de fréquence utilisée par le réseau pour toutes les cellules du groupe de cellules, en fonction des valeurs de priorité respectivement liées aux terminaux dont les communications montantes peuvent être interférés par le premier terminal et en fonction des valeurs de la priorité respectivement liées aux services requis par les terminaux dont les communications montantes peuvent être interférés par le premier terminal.
- une sélection (E6-18) du nombre (NbrSv1) nécessaire de blocs de ressources requis par le premier terminal, chaque bloc de ressource sélectionné ayant un coût total d'utilisation minimal, et
- une allocation (E6-19 à E6-22) des blocs de ressources sélectionnés et validés, pour le premier terminal.

9. Procédé selon la revendication 8, **caractérisé en ce que** la première station de base (SB1) alloue des blocs sélectionnés au premier terminal si :
- lesdits blocs de ressources sont considérés comme non utilisés par un autre terminal du groupe de cellules formé par la première cellule et ses cellules adjacentes, ou
- lesdits blocs de ressources sont déjà utilisés par un autre terminal du groupe de cellule et le premier terminal est considéré comme n'interférant pas l'autre terminal, ou
- lesdits blocs de ressources sont déjà utilisés par un autre terminal rattaché à la première station, et le coût total de besoin en communication (CcomT-GC1) pour le groupe de cellules formé de la première cellule et de ses cellules adjacentes est supérieur à un coût estimé de besoin en communication (CcomE-GC1) pour le groupe de cellules formé de la première cellule et de ses cellules adjacentes, le coût estimé étant déterminé en considérant les blocs de ressources libérés par l'autre terminal et alloués au premier terminal, ou
- lesdits blocs de ressources sont déjà utilisés par un autre terminal rattaché à une autre station de base que la première station, le premier terminal étant considéré comme interférant l'autre terminal, et le coût total de besoin en communication (CcomT-GC2) pour le groupe de cellules formé de la cellule contenant l'autre station de base et de ses cellules adjacentes est supérieur à un coût estimé de besoin en communication (CcomE-GC2) pour le groupe de cellules formé de la cellule contenant l'autre station de base et de ses cellules adjacentes, le coût estimé étant déterminé par l'autre station de base en considérant les blocs de ressources libérés par l'autre terminal et alloués au premier terminal.

10. Station de base dans un réseau de radiocommunication large bande exécutant des étapes du procédé d'allocation de ressources radio pour des communications montantes selon les revendications 1 à 9, le réseau étant formé de cellules comportant chacune au moins une station de base et des terminaux, la station de base appartenant à une première cellule (C1) d'un groupe de cellules (C1 à C7) formé de la première cellule et de ses cellules adjacentes et comprenant :
- une unité (UM) de mesures de qualité de signaux de référence SRS définis respectivement pour les terminaux du groupe de cellules,
- une unité (UDI) d'analyse de détection d'interférence d'un premier terminal (T1) sur des communications montantes d'autres terminaux rattachés aux stations de base du groupe de cellules,
- une interface (IF) reliée aux stations de base des cellules adjacentes pour recevoir ou envoyer des résultats de l'analyse de détection d'interférence, et
- une unité (UAL) d'allocation de ressources radio pour le premier terminal en fonction de résultats de l'analyse de détection d'interférence.

## Patentansprüche

1. Zuteilungsverfahren von Funkressourcen in einem Breitband-Funkkommunikationsnetz für aufsteigende Kommunikationen, wobei das Netz aus Zellen gebildet ist, die jeweils wenigstens eine Basisstation und Terminals umfassen, wobei das Verfahren **dadurch gekennzeichnet ist, dass** es bei einer Anbindung eines ersten Terminals (T1) an eine erste Basisstation (SB1) einer ersten Zelle (C1) einer Gruppe von Zellen (C1 bis C7), die aus der ersten Zelle und ihren benachbarten Zellen gebildet ist, die folgenden Schritte umfasst:
- Von jeder Basisstation der Gruppe von Zellen durchgeführte Messungen (E3) der Qualität von Referenzsignalen SRS, die jeweils für die Terminals der Gruppe von Zellen definiert sind, wobei jede Basisstation die Messungen (E3) durchführt, indem sie sukzessive jedem Terminal, das an die genannte Basisstation angebunden ist, die Übertragung eines Referenzsignal SRS befiehlt, das für das genannte jede Terminal gemäß einer ersten Sequenz der Übertragungszeit definiert ist, wobei die Sequenz der Übertragungszeit auf identische Weise auf die Zellen der Gruppe von Zellen (C1 bis C7) angewendet ist, wobei die Sequenz eine sukzessive Ablaufplanung von Übertragungen von Referenzsignalen SRS definiert, indem sie zu einem bestimmten Moment eine Identität einer Zelle der Gruppe von Zellen angibt, zu dem die Basisstation eine Übertragung eines Referenzsignals SRS auf eines der Terminals befehlen soll, das daran derart angebunden ist, dass ein einziges Terminal der Gruppe von Zellen gleichzeitig sein Referenzsignal SRS überträgt;
- eine Analyse (E4) zum Erkennen einer Interferenz des ersten Terminals (T1) an den aufsteigenden Kommunikationen der an die Basisstationen der Gruppe von Zellen angebundenen Terminals, wobei die Analyse in Abhängigkeit von den Messungen der Qualität der Referenzsignale SRS durch jede Basisstation der Gruppe von Zellen durchgeführt ist;
- eine Zuordnung von Funkressourcen (E6) von der ersten Basisstation für eine aufsteigende Kommunikation des ersten Terminals in Abhängigkeit von Ergebnissen der Analyse zum Erkennen einer Interferenz des ersten Terminals bei den aufsteigenden Kommunikationen der anderen Terminals der Gruppe von Zellen, wobei die Ergebnisse aus jeder Zelle der Gruppe von Zellen stammen.

2. Verfahren gemäß Anspruch 1, **dadurch gekennzeichnet, dass** es beim Anbinden des ersten Terminals an die erste Basisstation umfasst:
- eine Definition (E1) von ersten Übertragungsregeln (R-SRS1) eines ersten Referenzsignals SRS, das für das erste Terminal definiert ist, wobei die ersten Übertragungsregeln von den Übertragungsregeln von Referenzsignalen SRS anderer, an die Basisstation angebundenen Terminals unterschiedlich sind, damit die Referenzsignale aller an die erste Basisstation angebundenen Terminals untereinander orthogonal sind, und
- eine Übertragung der ersten definierten Übertragungsregeln auf die anderen Basisstationen der Gruppe von Zellen.

3. Verfahren gemäß irgendeinem der Ansprüche 1 bis 2, **dadurch gekennzeichnet, dass** die Analyse zum Erkennen einer Interferenz des ersten Terminals (T1) mit einem anderen der Terminals der Gruppe von Zellen in jeder Basisstation der Gruppe von Zellen die folgenden Schritte umfasst:
- eine Bestimmung eines Verhältnisses einer Messung der Qualität eines ersten Referenzsignals SRS, das für das erste Terminal für die Messung der Qualität eines Referenzsignals SRS definiert ist, das für das andere Terminal definiert ist, das an die Basisstation angebunden ist, die die Analyse zum Erkennen von Interferenzen durchführt,
- einen Vergleich des an einem Interferenz-Schwellenwert (SI) bestimmten Verhältnisse und
- wenn das bestimmte Verhältnis dem Interferenz-Schwellenwert- (SI) übersteigt, ein Erkennen einer Interferenz des ersten Terminals auf dem anderen Terminal.

4. Verfahren gemäß einem der voranstehenden Ansprüche, **dadurch gekennzeichnet, dass** zum Durchführen der Messungen (E3) der Qualität der Referenzsignale der Terminals der Gruppe von Zellen jede Basisstation sukzessive ein Referenzsignal SRS empfängt, das für ein Terminal der Gruppe von Zellen gemäß einer zweiten Sequenz der Empfangszeit definiert ist, wobei die Sequenz der Übertragungszeit und die Sequenz der Empfangszeit gleichzeitig funktionieren.

5. Verfahren gemäß irgendeinem der voranstehenden Ansprüche, **dadurch gekennzeichnet, dass** das Muster der Ablaufplanung zur Übertragung des Signals SRS sich in allen zellulären Netzen wiederholt und die in jedem Muster der Ablaufplanung identische Sequenz der Übertragungszeit derart angewendet ist, dass zwei Basisstationen von benachbarten Zellen, die jedoch zu unterschiedlichen Gruppen von Zellen gehören, die Übertragung eines Referenzsignals SRS nicht gleichzeitig anordnen können.

6. Verfahren gemäß irgendeinem der voranstehenden Ansprüche, **dadurch gekennzeichnet, dass** die Sequenz der Empfangszeit des Referenzsignals SRS jeder Zelle des Netzes eigen ist, wobei die Sequenz eine sukzessive Ablaufplanung des Empfangs von Referenzsignalen SRS definiert, die jeweils von den Terminals der Zellen einer Gruppe von Zellen übertragen werden, die von der Gruppe von Zellen gebildet ist, die von der Sequenz der Empfangszeit und den benachbarten Zellen der genannten Zelle angeordnet sind, indem zu einem bestimmten Moment die Identität einer Zelle, in der ein Terminal ein Referenzsignal SRS ausgibt, angegeben wird.

7. Verfahren gemäß Anspruch 6, **dadurch gekennzeichnet, dass** die Sequenz der Empfangszeit einer Zelle wenigstens mit der Sequenz der Übertragungszeit der Zelle synchron ist.

8. Verfahren gemäß irgendeinem der voranstehenden Ansprüche, dadurch, dass die Zuordnung von Ressourcen (E6) durch die erste Basisstation für das erste Terminal die folgenden Schritte umfasst:
- einen Empfang (E6-12) einer Anfrage zum Aufbau einer Kommunikation (RQC), umfassend eine Identität des ersten Terminals (ID-T1), eine Referenz (R-SV1) auf einen angeforderten Kommunikationsdienst und eine Information bezüglich der Anzahl (NbrSV1) von Ressourcenblöcken zum Kommunizieren,
- eine Bestimmung (E6-14) von Gesamtkosten des Kommunikationsbedarfs (CcomT-GC1) für die Gruppe von Zellen, die aus der ersten Zelle und ihren benachbarten Zellen in Abhängigkeit von Prioritätswerten (PU1, PU2, ..., PU6), die jeweils mit den Identitäten der Terminals der Gruppe von Zellen verbunden sind, von Dienstwerten (PV1, PV2, ...), die jeweils mit Diensten verbunden sind, die von den Terminals der Gruppe von Zellen angefordert werden, und von den Anzahlen (NbrSV1, ...) von Ressourcenblöcken, die jeweils von den Terminals der Gruppe von Zellen angefordert sind, gebildet ist,
- eine Bestimmung (E6-17) von Gesamtkosten der Nutzung (CuT-Bri, j) jedes Ressourcenblocks (Bri, j) eines Frequenzbandes, das vom Netz für alle Zellen der Gruppe von Zellen, in Abhängigkeit der Prioritätswerte, die jeweils mit den Terminals verbunden sind, deren aufsteigende Kommunikationen durch das erste Terminal interferiert sein können, und in Abhängigkeit von den Werten der Priorität, die jeweils mit den Diensten verbunden sind, die von den Terminals angefordert sind, deren aufsteigende Kommunikationen durch das erste Terminal interferiert sein können, verwendet ist,
- eine Auswahl (E6-18) der notwendigen Anzahl (NbrSv1) von Ressourcenblöcken, die von dem ersten Terminal angefordert ist, wobei jeder Ressourcenblock Mindest-Gesamtkosten der Nutzung aufweist und
- eine Zuordnung (E6-19 bis E6-22) der ausgewählten und validierten Ressourcenblöcke für das erste Terminal.

9. Verfahren gemäß Anspruch 8, **dadurch gekennzeichnet, dass** die erste Basisstation (SB1) die im ersten Terminal ausgewählten Blöcke zuordnet, wenn:
- die genannten Ressourcenblöcke als von einem anderen Terminal der Gruppe von Zellen, die von der ersten Zelle und ihren benachbarten Zellen gebildet ist, als nicht verwendet gelten, oder
- die genannten Ressourcenblöcke bereits von einem anderen Terminal der Gruppe von Zellen verwendet sind und das erste Terminal als nicht mit dem anderen Terminal interferierend gilt, oder
- die genannten Ressourcenblöcke bereits von einem anderen Terminal verwendet sind, das der ersten Station zugeordnet ist, und die Gesamtkosten des Kommunikationsbedarfs (CcomT-GC1) für die Gruppe von Zellen, die von der ersten Zelle und ihren benachbarten Zellen gebildet ist, höher sind als die geschätzten Kosten des Kommunikationsbedarfs (CcomE-GC1) für die Gruppe von Zellen, die von der ersten Zelle und ihren benachbarten Zellen gebildet ist, wobei die geschätzten Kosten unter Berücksichtigung der Ressourcenblöcke bestimmt sind, die von dem anderen Terminal freigesetzt sind und dem ersten Terminal zugeordnet sind, oder
- die genannten Ressourcenblöcke werden bereits von einem anderen Terminal verwendet, das an eine andere Basisstation angebunden ist als die erste Station, wobei das erste Terminal als mit dem anderen Terminal interferierend gilt und die Gesamtkosten des Kommunikationsbedarfs (CcomT-GC2) für die Gruppe von Zellen, die von der Zelle gebildet ist, die die andere Basisstation und ihre benachbarten Zellen umfasst, höher sind als die geschätzten Kosten des Kommunikationsbedarfs (CcomE-GC2) für die Gruppe von Zellen, die von der Zelle gebildet ist, die die andere Basisstation und ihre benachbarten Zellen umfasst, wobei die geschätzten Kosten durch die andere Basisstation unter Berücksichtigung der Ressourcenblöcke bestimmt sind, die von dem anderen Terminal freigesetzt und dem ersten Terminal zugeordnet sind.

10. Basisstation in einem Breitband-Kommunikationsnetz, das die Schritte des Zuordnungsprozesses von Funkressourcen für aufsteigende Kommunikationen gemäß den Ansprüchen 1 bis 9 ausführt, wobei das aus Zellen gebildete Netzwerk jeweils wenigstens eine Basisstation und Terminals umfasst, wobei die Basisstation zu einer ersten Zelle (C1) einer Gruppe von Zellen (C1 bis C7) gehört, die aus der ersten Zelle und ihren benachbarten Zellen gebildet ist und umfasst:
- eine Einheit (UM) zum Messen der Qualität von Referenzsignalen SRS, die jeweils für die Terminals der Gruppe von Zellen definiert sind,
- eine Einheit (UDI) zur Analyse zum Erkennen von Interferenzen eines ersten Terminals (T1) in den aufsteigenden Kommunikationen von anderen Terminals, die an den Basisstationen der Gruppe von Zellen angebunden sind,
- eine Schnittstelle (IF), die mit den Basisstationen der benachbarten Zellen verbunden ist, um Ergebnisse der Analyse zum Erkennen von Interferenzen zu empfangen und zu versenden, und
- eine Einheit (UAL) zum Zuordnen von Funkressourcen für das erste Terminal in Abhängigkeit von Ergebnissen der Analyse zum Erkennen von Interferenzen.

## Claims

1. A method for allocating radio resources in a wideband radio communication network for uplink communications, the network being formed by cells each having at least one base station and terminals, the method being **characterised in that** it comprises the following steps, upon associating a first terminal (T1) to a first base station (SB1) of a first cell (C1) of a group of cells (C1 to C7) formed by the first cell and its adjacent cells:
- measurements (E3), performed by each base station of the group of cells, of quality of reference signals SRS respectively defined for the terminals of the group of cells, each base station performing the measurements (E3) by successively instructing to each terminal associated with said each base station to transmit a reference signals SRS defined for said each terminal according to a first transmission time sequence, the transmission time sequence being applied identically to the cells of the group of cells (C1 to C7), the sequence defining a successive schedule of transmissions of reference signals SRS, by indicating at a given instant an identity of a cell of the group of cells in which the base station has to control a transmission of a reference signal SRS to one of the terminals associated therewith such that a single terminal of the group of cells transmits at a time its reference signal SRS;
- an analysis (E4) for detecting an interference of the first terminal (T1) on uplink communications of the terminals associated with the base stations of the group of cells, the analysis being performed as a function of the quality measurements of the reference signals SRS, by each base station of the group of cells,
- an allocation of radio resources (E6) by the first base station for an uplink communication of the first terminal as a function of the results of the analysis for detecting an interference of the first terminal on the uplink communications of the other terminals of the group of cells, the results coming from each cell of the group of cells.

2. The method according to claim 1, **characterised in that** it comprises upon associating the first terminal with the first base station:
- a definition (E1) of first transmission rules (R-SRS1) of a first reference signal SRS defined for the first terminal, the first transmission rules being distinct from the transmission rules of reference signals SRS of other terminals associated with the first base station such that the reference signals of all the terminals associated with the first base station are orthogonal to each other, and
- a transmission of the first transmission rules defined to the other base stations of the group of cells.

3. The method according to any of claims 1 and 2, **characterised in that** the analysis for detecting an interference of the first terminal (T1) on another of the terminals of the group of cells comprises, in each base station of the group of cells, the following steps:
- a determination of a ratio of a quality measurement of a first reference signal SRS defined for the first terminal on the quality measurement of a reference signal SRS defined for the other terminal associated with the base station performing the interference detection analysis,
- a comparison of the ratio determined with an interference threshold (SI), and
- if the ratio determined is higher than the interference threshold (SI), a detection of an interference of the first terminal on the other terminal.

4. The method according to one of the preceding claims, **characterised in that** to perform the quality measurements (E3) of the reference signals of the terminals of the group of cells, each base station successively receives a reference signal SRS defined for a terminal of the group of cells according to a second reception time sequence, the transmission time sequence and the reception time sequence operating simultaneously.

5. The method according to any of the preceding claims, **characterised in that** the transmission scheduling pattern of signal SRS is repeated in the entire cellular network and the transmission time sequence identical in each scheduling pattern is applied such that two base stations of adjacent cells but belonging to different sets of cells cannot schedule the transmission of a reference signal SRS at the same time.

6. The method according to any of the preceding claims, **characterised in that** the reception time sequence of reference signal SRS is specific to each cell of the network, the sequence defining a successive scheduling of receptions of reference signals SRS respectively transmitted by the terminals of the cells of a group of cells formed by the cell scheduled by the reception time sequence and the cells adjacent to said cell, by indicating at a given instant the identity of a cell in which a terminal emits a reference signal SRS.

7. The method according to claim 6, **characterised in that** the reception time sequence of a cell is synchronous with at least the transmission time sequence of the cell.

8. The method according to any of the preceding claims, **characterised in that** the resource allocation (E6) by the first base station for the first terminal comprises the following steps:
- a reception (E6-12) of a communication establishing request (RQC) comprising an identity of the first terminal (ID-T1), a reference (R-SV1) to a required communication service and a piece of information relating to the number (NbrSv1) of resource blocks necessary to communicate,
- a determination (E6-14) of a total cost of communication need (CcomT-GC1) for the group of cells formed by the first cell and its adjacent cells as a function of priority values (PU1, PU2, ..., PU6) respectively related to the identities of the terminals of the group of cells, service values (PV1, PV2, ...) respectively related to services required by the terminals of the group of cells, and numbers (NbrSV1, ...) of resource blocks respectively required by the terminals of the group of cells,
- a determination (E6-17) of a total cost of use (CuT-Bri,j), of each resource block (Bri,j) of a frequency band used by the network for all the cells of the group of cells, as a function of the priority values respectively related to the terminals the uplink communications of which can be interfered by the first terminal and as a function of the priority values respectively related to the services required by the terminals the uplink communications of which can be interfered by the first terminal,
- a selection (E6-18) of the necessary number (NbrSV1) of resource blocks required by the first terminal, each selected resource block having a total minimum cost of use, and
- an allocation (E6-19 to E6-22) of the resource blocks selected and validated, for the first terminal.

9. The method according to claim 8, **characterised in that** the first base station (SB1) allocates selected blocks to the first terminal if:
- said resource blocks are considered as not used by another terminal of the group of cells formed by the first cell and its adjacent cells, or
- said resource blocks are already used by another terminal of the group of cells and the first terminal is considered as not interfering with the other terminal, or
- said resource blocks are already used by another terminal associated with the first station, and the total communication need cost (CcomT-GC1) for the group of cells formed by the first cell and its adjacent cells is higher than an estimated communication need cost (CcomE-GC1) for the group of cells formed by the first cell and its adjacent cells, the estimated cost being determined by considering the resource blocks released by the other terminal and allocated to the first terminal, or
- said resource blocks are already used by another terminal associated with a base station other than the first station, the first terminal being considered as interfering with the other terminal, and the total cost of communication need (CcomT-GC2) for the group of cells formed by the cell containing the other base station and its adjacent cells is higher than an estimated communication need cost (CcomE-GC2) for the group of cells formed by the cell containing the other base station and its adjacent cells, the estimated cost being determined by the other base station by considering the resource blocks released by the other terminal and allocated to the first terminal.

10. A base station in a wideband radio communication network executing steps of the method for allocating radio resources for uplink communications according to claims 1 to 9, the network being formed by cells each including at least one base station and terminals, the base station belonging to a first cell (C1) of a group of cells (C1 to C7) formed by the first cell and its adjacent cells and comprising:
- one unit (UM) of quality measurements of reference signals SRS respectively defined for the terminals of the group of cells,
- one unit (UDI) of analysis for detecting interference of a first terminal (T1) on uplink communications of other terminals associated with the base stations of the group of cells,
- an interface (IF) connected to the base stations of the adjacent cells to receive or send results of the analysis for detecting interference, and
- one unit (UAL) for allocating radio resources for the first terminal as a function of the results of the analysis for detecting interference.
